# EUROPEAN PATENT APPLICATION

(11) **EP 1 014 739 A1**
(43) Date of publication of application: **28.06.2000**
(21) Application number: 99957676.2
(22) Date of filing: 29.06.1999
(51) Int. Cl.: H04Q 7/30, H04Q 7/32

(54) **RADIO COMMUNICATION DEVICE AND METHOD**

(30) Priority: 30.06.1998 JP 18416798
(71) Applicant: MATSUSHITA ELECTRIC INDUSTRIAL CO., LTD., Kadoma-shi, Osaka 571-8501 (JP)
(72) Inventor: SHI, Guizeng, 201 Rafiyu Nagashima, Yokohama-shi, Kanagawa 236-0042 (JP); KATO, Osamu, Yokosuka-shi, Kanagawa 237-0066 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP9903500
(87) International publication number: WO0001178

(57) **Abstract**

The radio communication apparatus of the present invention tolerates a reduction in the transmission efficiency of the uplink channel with light load and sends the channel condition report information of the downlink channel with heavy load to the communication terminal as a feedback signal. While the radio channel condition of the downlink channel is poor, data transmission is temporarily delayed according to this channel condition report information. This prevents unnecessary retransmissions and alleviates contention of channels. Data transmission is restarted when the normal channl condition of the transmission path is restored.

## Description

### Technical Field

The present invention relates to an apparatus and method for radio communications, especially those suitable for high data rate multimedia communications.

### Background Art

A conventional radio communication system is used mainly to accommodate symmetric traffic and there are two kinds of system: FDD (Frequency Division Duplex) and TDD (Time Division Duplex).

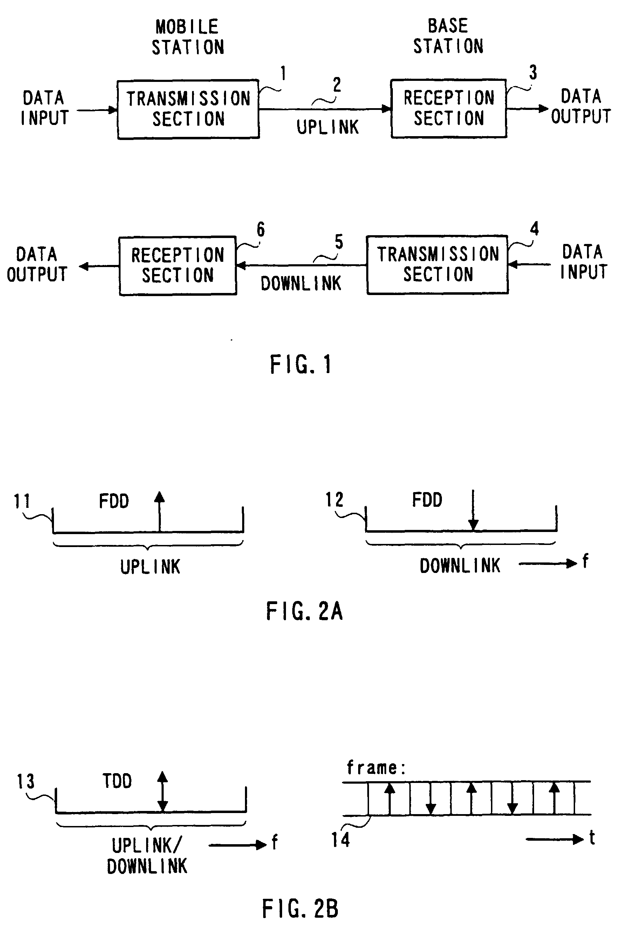

FIG.1 is a schematic diagram showing a conventional system configuration. A mobile station, which is a communication terminal, and bass station both comprise an independent transmission/reception apparatus respectively. Information data input from the base station side is sent using downlink channel 5 from data transmission section 4 of the base station. This information data is received by data reception section 6 of the mobile station and transferred to the data reception terminal.

On the other hand, data input by the user on the mobile station side is transmitted from data transmission section 1 to the base station side using uplink channel 2. This data is received by data reception section 3 of the base station and sent to the upstream side of the base station. Here, no transmission control is performed over either the uplink or downlink.

The conventional system is explained using FIG.2. In the FDD system, the uplink channel and downlink channel use different bands 11 and 12 as shown in FIG.2A. On the other hand, in the TDD system, the uplink channel and downlink channel use same frequency band 13 as shown in FIG.2B having channel configuration 14, which is divided into slots on the time scale. In either system, no data transmission control and accommodation measures of asymmetric traffic are taken under the fading conditions.

For a high-speed radio data communication system, efficient transmission in a fading environment is the most important issue. In the fade duration, consecutive block errors occur with a burst. Even if the data is transmitted, it result only in retransmission, which seriously deteriorates the efficiency. Moreover, asymmetric traffic is anticipated due to accesses to/from servers and the Internet, multicast or broadcast services in the future.

Therefore, effective utilization of channels for high data rate multimedia communications is required and a more simple and effective transmission system using an asymmetric traffic characteristic is preferred.

In recent years, a modulation level control adaptive modulation system is proposed. This system implements a high transmission rate by adapting modulation parameters to the conditions of the transmission path under a binding condition that a certain transmission quality should be maintained all the time, and if the condition of the transmission path is poor, reducing the transmission rate by reducing the modulation levelsand symbol rate, and if the condition of the transmission path is good, increasing the transmission rate by increasing the modulation levels and symbol rate.

However, such a system requires estimations of the symbol rate and the level of modulation, and more accurate estimations of the condition of the transmission path and modulation scheme. Thus a complicated system configuration is anticipated.

### Disclosure of Invention

It is an objective of the present invention to provide an apparatus and method for radio communications capable of effective utilization of channels and accommodation of asymmetric traffic for high data rate multimedia communications. The essence of the present invention is to prevent unnecessary retransmissions and alleviate contention of channels by temporarily delaying transmission of data when the condition of the radio channels is poor and restarting it when the normal condition of the transmission path is restored. Introducing this method to the uplink or downlink channels can solve the problem of accommodation of asymmetric traffic.

### Brief Description of Drawings

FIG.1 is a diagram showing an outlined configuration of a conventional radio communication system;
FIG.2A and FIG.2B are diagrams to explain a symmetric traffic accommodation system in the radio communication system using a conventional radio communication apparatus;
FIG.3 is a block diagram showing a configuration of a radio communication apparatus of the present invention;
FIG.4 is a block diagram showing an internal configuration of a channel deterioration detection section in the radio communication apparatus shown in FIG.3;
FIG.5 is a block diagram showing an internal configuration of the transmission control section in the radio communication apparatus shown in FIG.3;
FIG.6 is a diagram showing an outlined configuration of a radio communication system using a radio communication apparatus according to Embodiment 1 of the present invention;
FIG.7 is a diagram showing an outlined configuration of a radio communication system using a radio communication apparatus according to Embodiment 2 of the present invention (uplink transmission control); and
FIG.8A and FIG.8B are diagrams to explain an asymmetric traffic accommodation system in the radio communication system using the radio communication apparatuses according to Embodiments 1 and 2 above.

### Best Mode for Carrying out the Invention

With reference now to the attached drawings, the embodiments of the present invention are explained in detail below.

### (Embodiment 1)

FIG.1 is a block diagram showing a configuration of a radio communication apparatus of the present invention. A signal transmitted from the other end of the radio link is received by reception section 102 via antenna 101. Reception section 102 performs various kinds of processing such as frequency conversion, amplification and A/D conversion on the signal and the processed signal is sent to demodulation section 103. Demodulation section 103 carries out predetermined demodulation processing on this signal and obtains reception data.

The output of reception section 102 and/or the output of demodulation section 103 are sent to channel deterioration detection section 104 where the condition of the channel is detected. This detected result is sent to transmission control section 106.

On the other hand, transmission data is sent to modulation section 105 where the transmission data is subjected to predetermined modulation processing. Transmission control section 106 controls whether to transmit the signal or delay the transmission according to the deterioration condition of the channel. The transmission-controlled signal is sent to transmission section 107 where the signal is subjected to D/A conversion, amplification and frequency conversion, and then transmitted via antenna 101.

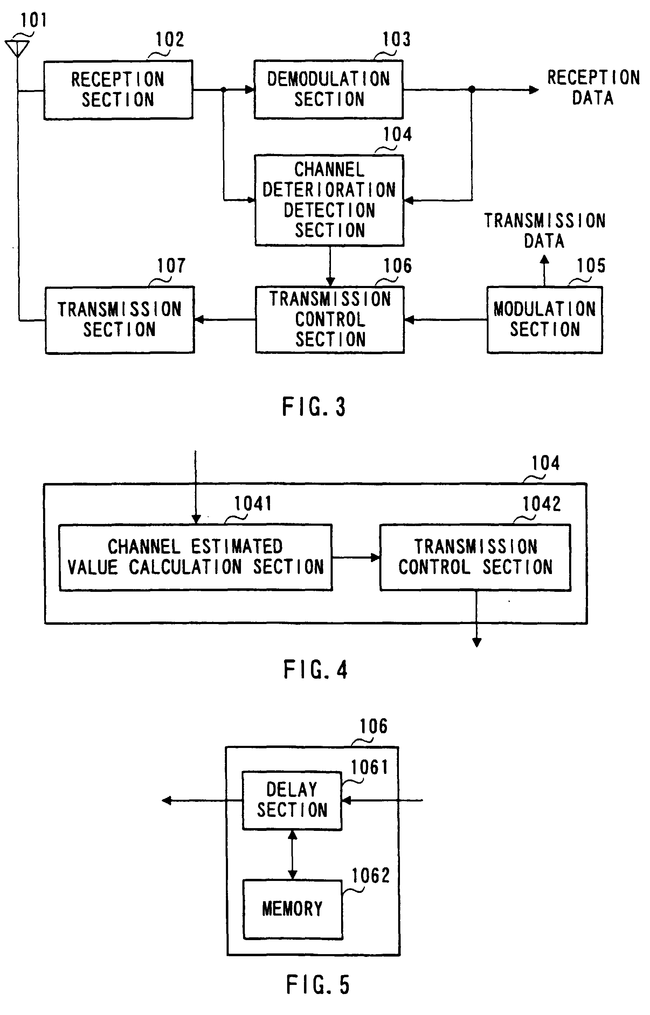

Channel deterioration detection section 104 comprises channel estimated value calculation section 1041 and determination section 1042 as shown in FIG.4. Estimated value calculation section 1041 measures the reception quality of the reception signal such as the reception level, SIR and error rate, multi-path profile and/or error pattern analysis value and calculates a channel estimated value based on the measurement result.

This channel estimated value is sent to determination section 1042 and determination section 1042 determines whether the channel is deteriorated or not. This determination is carried out using a predetermined threshold, for example.

Channel control section 106 comprises delay section 1061 and memory 1062 as shown in FIG.5. The modulated signal is directly sent to transmission section 107 or stored in memory 1062 by delay section 1061 based on channel information from channel deterioration detection section 104.

More specifically, if the channel condition is poor, delay section 1061 stores modulated transmission data in memory 1062 and if the channel condition is not poor (good), delay section 1061 sends the transmission data to transmission section 107. When the channel condition changes from poor to good, delay section 1061 sends the transmission data stored in memory 1062 to transmission section 107. The determination that the channel condition has changed from poor to good can also be made by determination using a threshold as shown above.

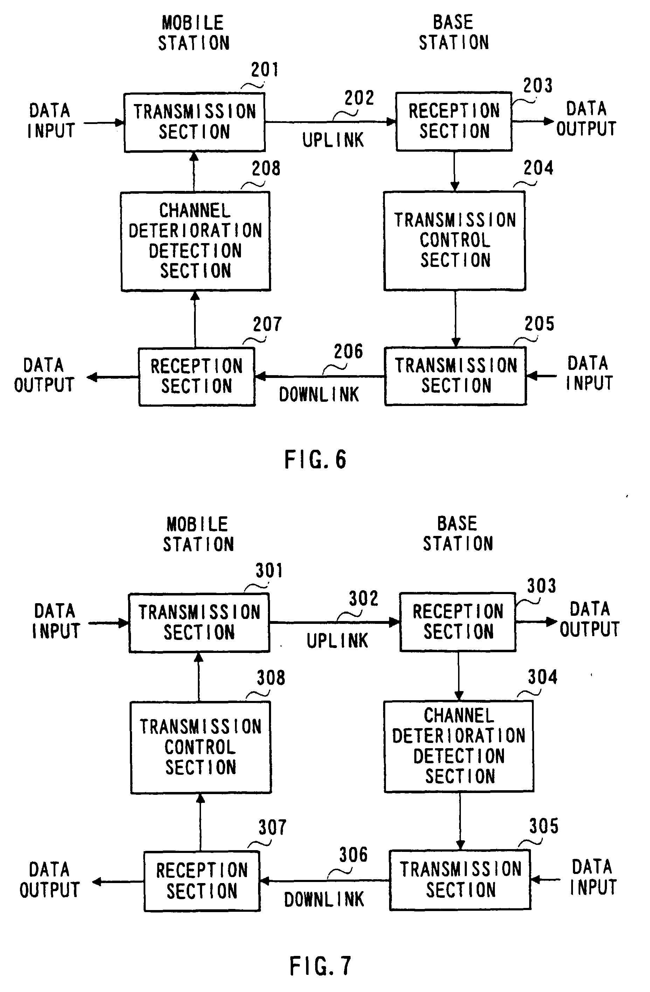

FIG.6 is a block diagram showing an outlined configuration of a radio communication system comprising a radio communication apparatus according to Embodiment 1 of the present invention. In the radio communication system shown in FIG.6, information data input from the base station side is sent from data transmission section 205 of the base station using downlink channel 206. This information data is received by reception section 207 of the mobile station, which is a communication terminal, and transferred to a data reception terminal. At the same time, channel deterioration detection section 208 of the mobile station monitors the channel condition of the downlink channel and the information on deterioration of the transmission path or feedback signal such as fading detection parameters are sent to data transmission section 201 as channel condition report information.

On the other hand, data entered by the user on the mobile station side and a feedback signal including the downlink channel condition report information are sent from data transmission section 201 and received by data reception section 203 of the base station via uplink channel 202. This feedback signal is sent to transmission control section 204. Transmission control section 204 controls data transmission section 205 of the base station using the following LAUL (Luxury Assistance by Up Link) scheme when the channel condition falls into a valley of fading.

The operation of the LAUL scheme is explained as follows. This system detects the channel condition of the uplink/downlink channels from a multi-path profile, signal quality such as SIR and power (signal level) and error pattern analysis value, and temporarily delays data transmission of the channel while the channel condition of the downlink/uplink channels is poor.

In this way, the present embodiment seeks to improve the transmission efficiency of the system and use channels more effectively. This is based on the concept that when the channel condition falls into a valley of fading, block errors may occur consecutively and most data transmissions would result in retransmissions, and therefore it would be better to pass over the channel to other users.

More specifically, in this system, channel deterioration detection section 208 detects the channel condition of downlink channel 206. In this case, the channel condition is detected using a multi-path profile, signal quality and/or error pattern analysis value, etc. This detected channel condition is sent from transmission section 201 as the report information in the form of a feedback signal together with the user data and received by reception section 203 of the base station through uplink channel 202. Then, transmission control section 204 controls data transmission based on the channel condition report information included in the received feedback signal.

When the channel condition is poor, for example, when the channel condition is in a valley of fading, this transmission control temporarily stops and delays transmission of data other than real time information with a requirement of delay such as voice. This greatly prevents unnecessary retransmissions of data affected by fading.

When transmission control section 204 receives channel condition report information that the channel condition is favorable, transmission control section 204 restarts data transmission.

The operations of channel deterioration detection section 208 and transmission control section 204 are as described above.

As shown above, since control is performed so that channel condition report information is sent using a channel with a small amount of transmission and data transmission is avoided when the channel condition falls into a valley of fading, it is possible to efficiently perform data transmission control over a channel whose channel condition is to be monitored and carry out data transmission only when the channel condition is favorable. This is especially useful for asymmetric traffic.

Therefore, this radio communication system provides data transmission control at the occurrence of fading and measures for accommodation of asymmetric traffic, thus enables effective utilization of channels and accommodation of asymmetric traffic in high data rate multimedia communications.

As shown above, the present embodiment allows the transmission efficiency to be improved under fading conditions by controlling data transmission through a downlink channel using the up link channel when the channel condition falls into a valley of fading.

### (Embodiment 2)

FIg.7 is a block diagram showing an outlined configuration of a radio communication system comprising a radio communication apparatus according to Embodiment 2 of the present invention. In the radio communication system shown in FIG.7, data input by the user on the mobile station side is sent from data transmission section 301 and is received by data reception section 303 of the base station through uplink channel 302. At the same time, channel deterioration detection section 304 of the base station monitors the channel condition of the uplink channel and the information on deterioration of the transmission path and a feedback signal such as fading detection parameters are sent to data transmission section 305 as the channel condition report information.

On the other hand, information data entered from the base station side and the feedback signal including the uplink channel condition report information are sent from data transmission section 305 of the mobile station using downlink channel 306. This information data is received by data reception section 307 of the mobile station, a communication terminal, and transferred to a data reception terminal. This feedback signal is sent to transmission control section 308. Transmission control section 308 controls data transmission section 301 of the mobile station using the aforementioned LAUL scheme when the channel condition falls into a valley of fading.

More specifically, in this system, channel deterioration detection section 304 detects the channel condition of uplink channel 302. In this case, the channel condition is detected using a multi-path profile, signal quality and/or error pattern analysis value, etc. This detected channel condition is transmitted from transmission section 305 as the report information together with the user data in the form of a feedback signal and received by reception section 307 of the mobile station using downlink channel 306. Then, data transmission is controlled by transmission control section 308 based on the channel condition report information included in the received feedback signal.

The operations of channel deterioration detection section 304 and transmission control section 308 are as described above.

When the channel condition is poor, for example, when the channel condition is in a valley of fading, this transmission control temporarily stops and delays transmission of data other than real time information with a requirement of delay such as voice. This greatly prevents unnecessary retransmissions of data affected by fading. This can alleviate contention of channels and accommodate asymmetric traffic effectively. Furthermore, since control is performed so that data transmission is avoided when the channel condition falls into a valley of fading, it is possible to perform data transmission only when the channel condition is favorable.

Moreover, when transmission control section 308 receives channel condition report information that the channel condition is favorable. transmission control section 308 can restart data transmission. This reduces data retransmissions and enables efficient data transmission.

As shown above, since control is performed so that channel condition report information is sent using a channel with a small amount of transmission and data transmission is avoided when the channel condition falls into a valley of fading, it is possible to efficiently perform data transmission control over a channel whose channel condition is to be monitored and carry out data transmission only when the channel condition is favorable. This is especially useful for asymmetric traffic.

Therefore, this radio communication system provides data transmission control at the occurrence of fading and measures for accommodation of asymmetric traffic, enables effective utilization of channels and accommodation of asymmetric traffic in high data rate multimedia communications.

As shown above, the present embodiment allows the transmission efficiency to be improved under fading conditions by controlling data transmission over the uplink channel using the downlink channel when the channel condition falls into a valley of fading.

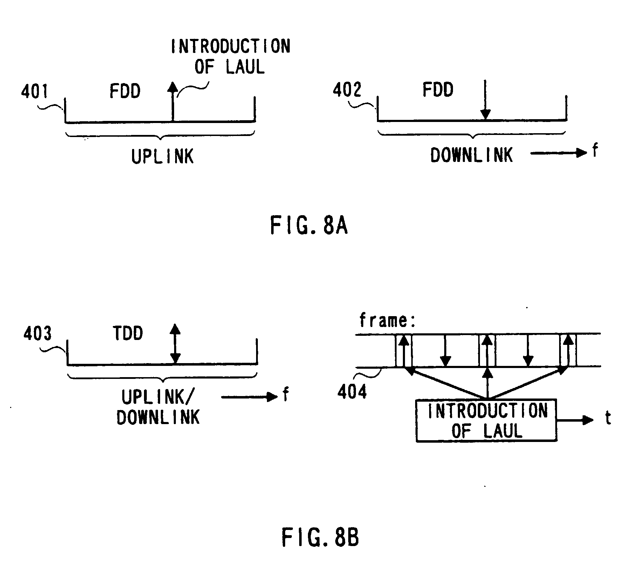

FIG.8 is a diagram to explain the asymmetric traffic accommodation system in the radio communication system comprising the radio communication apparatus of the present invention. FIG.8A indicates the case where the LAUL scheme is introduced to the FDD system and FIG.8B indicates the case where the LAUL scheme is introduced to the TDD system.

For high data rate radio communications, asymmetric traffic occurs due to such services as accesses to/from servers and Internet, multicast and broadcast. It is possible to use the LAUL system in which we use the uplink channel with light load and control the downlink channel with heavy load, thus make it possible to sufficiently accommodate the asymmetric traffic above. That is, since channel condition report information is sent using a channel with light load, it is possible to efficiently control data transmission in a channel whose channel condition is to be monitored.

More specifically, as shown in FIG.8A and FIG.8B, the FDD system can control downlink channel 402 with heavy traffic by introducing the LAUL scheme to uplink channel 401, and the TDD system can control the downlink channel by introducing the LAUL scheme to the uplink channel 403, that is, by introducing the LAUL scheme to uplink slots in frame 404 shown in FIG.8B.

As shown above, introducing the LAUL system to the uplink channel makes it possible to improve the transmission efficiency and accommodate asymmetric traffic under fading conditions in the FDD system or TDD system. It is also possible to introduce the LAUL system to the downlink channel.

The present invention is not limited to Embodiments 1 and 2 above, but can be implemented with various modifications. For example, Embodiments 1 and 2 above explained the case where the communication terminal apparatus is a mobile station, but the present invention is also applicable to cases where the communication terminal apparatus is a communication terminal other than a mobile station.

As explained above, the present invention controls data transmission when the channel condition of either one or both of the uplink channel and downlink channel is/are poor, using the channel whose channel condition is not poor and notifying the channel condition, thus make it possible to improve the transmission efficiency and accommodate asymmetric traffic under a fading condition in high data rate radio multimedia communications.
This application is based on the Japanese Patent Application No.HEI 10-184167 filed on June 30, 1998, entire content of which is expressly incorporated by reference herein.

### Industrial Applicability

The present invention is applicable to a base station apparatus or a communication terminal apparatus such as mobile station in a digital radio communication system.

## Claims

1. A radio communication apparatus comprising:
inspecting means for inspecting the channel condition of a first channel that receives data from the other station; and
transmitting means for transmitting channel condition report information based on the inspection result to said other station through a second channel that transmits data to said other station.

2. The radio communication apparatus according to claim 1, wherein the transmitting means transmits said channel condition report information when there is enough capacity for the traffic of the second channel.

3. A radio communication apparatus comprising:
receiving means for receiving channel condition report information from the other station; and
delaying means for temporarily delaying data transmission based on said channel condition report information.

4. The radio communication apparatus according to claim 3, wherein the delaying means delays data transmission upon reception of channel condition report information that the channel condition is poor.

5. The radio communication apparatus according to claim 4, wherein the delaying means delays transmission of data other than data with a considerable delay.

6. The radio communication apparatus according to claim 4, wherein the delaying means restarts data transmission upon reception of channel condition report information that the channel condition is favorable.

7. A communication terminal apparatus having a radio communication apparatus, said radio communication apparatus comprising:
inspecting means for inspecting the channel condition of a first channel that receives data from the other station; and
transmitting means for transmitting channel condition report information based on the inspection result to said other station through a second channel that transmits data to said other station.

8. A base station apparatus having a radio communication apparatus, said radio communication apparatus comprising:
inspecting means for inspecting the channel condition of a first channel that receives data from the other station; and
transmitting means for transmitting channel condition report information based on the inspection result to said other station through a second channel that transmits data to said other station.

9. A radio communication method comprising:
the inspecting step of inspecting the channel condition of a first channel that receives data from a first radio communication apparatus;
the transmitting step of transmitting channel condition report information based on the inspection result to said first radio communication apparatus through a second channel that transmits data to said first radio communication apparatus;
the receiving step of receiving channel condition report information from a second radio communication apparatus; and
the delaying step of temporarily delaying data transmission based on said channel condition notification information.

10. The radio communication method according to claim 9, wherein the delaying step delays data transmission upon reception of channel condition report information that the channel condition is poor.

11. The radio communication method according to claim 9, wherein when the amount of transmission in the first channel and that of the second channel are asymmetric, the channel condition report information is transmitted through the channel with the smaller amount of transmission.
